# EUROPEAN PATENT SPECIFICATION

(11) **EP 2 887 055 B1**
(45) Date of publication and mention of the grant of the patent: **11.05.2016**
(21) Application number: 13197867.8
(22) Date of filing: 17.12.2013
(51) Int. Cl.: G01N 21/956, G01N 21/88

(54) **Method and apparatus for detection of visible defects**
Verfahren und Vorrichtung zur Detektion sichtbarer Fehler
Procédé et appareil de détection de défauts visibles

(43) Date of publication of application: 24.06.2015
(73) Proprietor: CSEM Centre Suisse d'Electronique et de Microtechnique SA - Recherche et Développement, 2002 Neuchâtel (CH)
(72) Inventor: Hasler, David, 2000 Neuchâtel (CH); Chebira, Amina, 1004 Lausanne (CH); Basset, Guillaume, 68330 Huningue (FR); Beuchat, Pierre-Alain, 2056 Dombresson (CH)
(74) Representative: GLN SA

(56) References cited:
- EP-A2- 0 662 609
- WO-A1-00/11400
- WO-A1-99/22224
- WO-A1-2007/020554
- US-A- 5 060 065
- US-B2- 7 113 313
- US-B2- 7 227 166

## Description

### Technical Field

The present invention relates to the field of inspection of parts. In particular, it relates to a method and apparatus for detection of visible defects on parts.

### State of the art

In certain types of manufacturing, 100% inspection of parts for detection of visible is often required to ensure that a visibly defective part does not make it into a finished product. Traditionally, this has been done manually, using human operators and the naked eye, however various automated systems have been proposed to carry out this task, particularly in the field of inspection of printed circuit boards.

For instance, US 5,060,065 describes a system in which a series of cameras and a series of light sources are associated with a hemispherical dome. A printed circuit board is placed at the centre of the open end of the dome, and is illuminated by various combinations of LEDs. A sequence of images is taken and a reliefed illustration or three-dimensional image is generated from these images. Similar setups are disclosed in US 7,113,313, US 2013/0156293, US 7,352,892 and WO 99/22224.

However, these arrangements and methods are limited by the combinations of lighting patterns that they are capable of producing. Furthermore, a rigourous inspection with any of these systems requires a large number of images to be taken, which can be slow and is therefore expensive in a production line situation.

The object of the present invention is thus to overcome the above-mentioned drawbacks of the prior art, and thereby to propose a method and a system for detection of visible defects in parts which is fast and efficient.

### Disclosure of the invention

This object is attained by a method of detection of visible defects in physical parts, comprising providing an apparatus comprising a hollow structure adapted to receive a part, a plurality of light sources distributed on the inside of the hollow structure, a camera for imaging the part, and a controller for selectively illuminating at least a portion of said light sources in predetermined combinations at predetermined intensities and for actuating said camera.

The method further comprises an operational phase comprising the steps of:
- providing a part to be tested in the interior of said hollow structure;
- illuminating the part to be tested with the light sources in said predetermined combinations at said predetermined intensities;
- imaging the part to be tested synchronously with illuminating said part to be tested, thereby obtaining a number n of original test images; and
- processing said original test images to detect visible defects in said part to be tested.

According to the invention, the predetermined combinations of light sources and said predetermined intensities are determined in a setup phase by:
- imaging a number of parts without visible defects and a number of parts with known visible defects while illuminating each part with individual light sources or groups of light sources at known intensity, thereby obtaining a number N of sample images corresponding to a given part;
- identifying visible defects in said sample images;
- combining said sample images for each part into an N-dimensional image for each part, the N-dimensional image having N dimensions per pixel;
- performing a dimensionality reduction of said N-dimensional images to reduce the dimensionality of said images while still permitting identification of said visible defects, thereby generating corresponding n-dimensional images;
- determining said predetermined combinations of light sources and said predetermined intensities based on a result of said dimensionality reduction.

In consequence, the method can be carried out quickly and efficiently, due to the determination of exactly how many images are required and under what combinations of lighting conditions, while retaining a high degree of accuracy in the detection.

Advantageously, the dimensionality reduction may be performed by carrying out a Principal Component Analysis, thereby generating a plurality of eigenvectors representing the relative intensity of each light source, each eigenvector being associated with a corresponding eigenvalue, ordering the eigenvectors according to magnitude of the respective eigenvalue, discarding eigenvectors with lower eigenvalues so as to determine the minimum number n of eigenvectors to permit identification of visible defects, said number n corresponding to the minimum number of images required to permit identification of visible defects, the corresponding eigenvectors representing the relative illumination of each light source for a given image. A simple, efficient method for determining the optimal lighting conditions is thus proposed.

Advantageously, said eigenvectors may be normalised such that no component of an eigenvector has a value below zero and such that no component of an eigenvector has a value higher than a value corresponding to the maximum possible intensity of light. In consequence, the lighting conditions can be adapted to be within the limitations of the apparatus, with no light intensity being above or below what the individual light sources can provide.

Alternatively, the dimensionality reduction may be performed by a nonlinear optimisation procedure, said nonlinear optimisation procedure comprising maximising a performance criterion so as to compute the minimum number n of images required to permit identification of visible defects.

Advantageously, the method may further comprise a calibration phase, performed subsequent to the setup phase. This calibration phase comprises:
- taking a number n of images of each of a plurality of parts without visible defects, said images being obtained while illuminating each of said parts with the light sources in said predetermined combinations at said predetermined intensities, thereby generating a plurality of original calibration images;
- combining said original calibration images into an original multimodal calibration image for each part;
- performing compression on said original multimodal calibration images, thereby generating a compressed multimodal calibration image corresponding to a respective original multimodal calibration image of a respective part;
- performing decompression on said compressed multimodal calibration images, thereby generating a plurality of decompressed multimodal calibration images each corresponding to a respective compressed multimodal calibration image and to a corresponding original multimodal calibration image for each part;
- defining a threshold vector representing the difference between each original multimodal calibration image and the corresponding decompressed multimodal calibration image, said compression being adapted such that said values contained within said threshold vector are lower than a threshold value.

In consequence, the compression is "trained" so as to be able to reconstruct accurately only unflawed pieces.

Advantageously, the adaptation of said compression comprises minimising said threshold vector and/or said threshold value by means of at least one of:
training a neural network; performing Principal Component Analysis;
performing Independent Component Analysis.

Advantageously, the image processing of the original test images in the operational phase comprises:
- combining said original test images into an original multimodal test image;
- performing said compression, i.e. the same compression as determined in the calibration phase, on said original multimodal test image, thereby generating a compressed multimodal test image;
- performing decompression on said compressed multimodal test image, thereby generating a decompressed multimodal test image;
- defining a test vector representing a difference between the original multimodal test image and corresponding decompressed multimodal test image.

If said test vector comprises values greater than said predetermined threshold value, or greater than said predetermined threshold value plus a tolerance value, the part under test is determined to comprise a visible defect, whereas if the test vector does not comprise values greater than said predetermined threshold value, or greater than said predetermined threshold value plus a tolerance value, the part is determined as not comprising a visible defect.

By thus comparing the original test images with the decompressed test images, since the compression has been "trained" to only retain sufficient information on unflawed parts, any visible flaw is identifiable in the difference between the original test images and the decompressed test images.

Advantageously, said compression may be performed by a dimensionality reduction.

Advantageously, the adaptation of said compression may comprise minimising said threshold vector and/or said threshold value by means of at least one of: training a neural network; performing Principal Component Analysis; performing Independent Component Analysis.

Advantageously, the method may also comprise defining a vector R1a representing said decompressed multimodal calibration image, the dimensionality reduction comprises ensuring that, for an part without a visible defect, the sum SR1a of the absolute values of vector R1a is at least ten times greater than the sum of the absolute values of the corresponding test threshold.

Advantageously, the predetermined intensities of the light sources are determined by the brightnesses of the light sources and/or the length of time of illumination of the light sources.

The aim of the invention is also attained by an apparatus for detection of visible defects in physical parts, which comprises:
- a hollow structure adapted to receive a part;
- a plurality of light sources distributed on the inside of the hollow structure;
- a camera for imaging the part;
- a controller for selectively illuminating at least a portion of said light sources in predetermined combinations at predetermined intensities and for actuating said camera.

According to the invention, the controller is adapted, i.e. programmed, to carry out the method as described above.

Advantageously, the hollow structure may be a hemispherical enclosure closed by a base, said base comprising a substantially central opening for receiving a part to be tested, the apparatus further comprising a part holder adapted to support said part to be tested and adapted to travel underneath the enclosure so as to position the part holder in a test position in said substantially central opening, said part holder being arranged to close said substantially central opening when said part holder is in said test position. Parts to be tested can thus be rapidly transported into and out of the enclosure, the part holder serving to help exclude undesired light from entering the enclosure since it closes the central opening. Preferably, at least a part of said part holder is substantially scratch-resistant, in particular a part thereof destined to close said substantially central opening, and wherein the inside of said enclosure is coated with an anti-reflective black coating. Typically, high-performance antireflective coatings have poor scratch resistance, and a scratched anti-reflective coating will negatively influence the results more than a highly scratch resistant surface with lower-quality antireflection properties.

Advantageously, said light sources are LEDs disposed at a plurality of different azimuths and/or elevations on the inside of said hemispherical enclosure at sufficient distance from the substantially central opening that light rays emanating from said LEDs are quasi-parallel at the piece to be tested. To achieve this, the piece, when considered from the position of the light sources 3, should subtend an angle of <20° of arc, ideally <10°, more ideally <5°. This allows sharp images to be generated without requiring complex focussing arrangements on each LED.

Advantageously, the camera is at least one of: a colour camera; a light field camera; a polarisation camera.

The invention further relates to a computer program product comprising at least one computer-readable storage medium having executable computer-readable program code portions stored therein, the computer-readable program code portions comprising a sequence of commands for causing said controller comprised in an apparatus as described above to carry out the method described above. In consequence, an existing, similar apparatus can be reprogrammed to carry out the method of the invention.

### Brief description of the drawings

Further details of the invention will be explained with reference to the following figures, which show :
- Fig. 1: a schematic side view of an apparatus according to the invention;
- Fig. 2: a perspective view of the underside of the apparatus of fig. 1;
- Fig. 3: a flow diagram of an overview of the method according to the invention;
- Fig. 4: a flow diagram of the setup phase of the method;
- Fig. 5: a flow diagram of the calibration phase of the method;
- Fig. 6: a flow diagram of the operational phase of the method; and
- Fig. 7: a schematic representation of the operational phase of the method.

### Embodiment of the invention

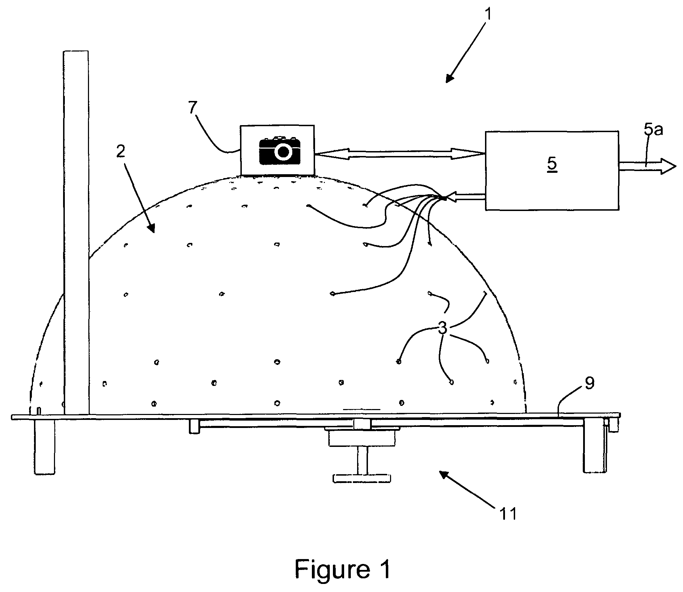

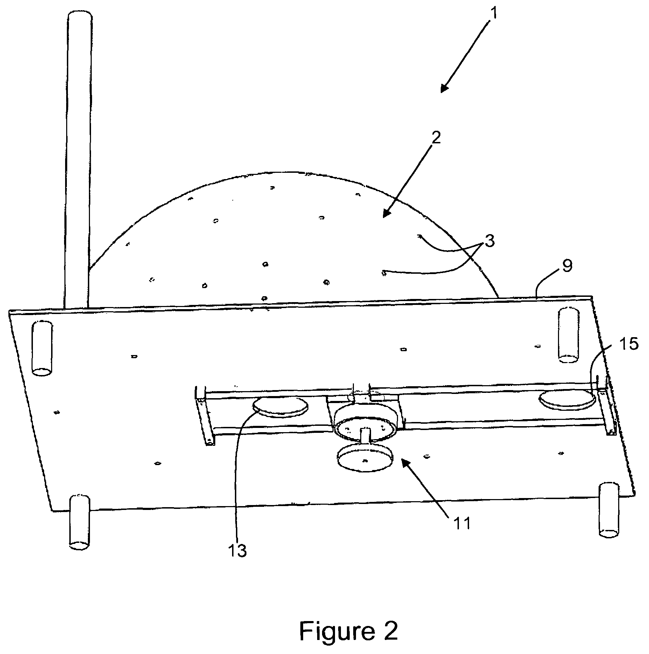

Figures 1 and 2 illustrate an apparatus 1 according to the invention. This apparatus comprises a hollow structure 2, which in the present example is arranged as an enclosure 2 constructed as a hemispherical dome, although other forms are of course possible, such as a pyramid, a stepped pyramid, a stepped dome, and so on. "Wireframe"-type structures, or structures incorporating lateral openings are also possible. Arranged on enclosure 2 and pointing inwards are a plurality of light sources, 3 here illustrated schematically by circles, only some of which are indicated with reference signs. As the invention is currently practised today, the light sources 3 are LED's embedded in holes penetrating the wall of the enclosure 2. The inside of the enclosure 2 is coated with a high-performance nonreflective coating to prevent stray light reflections. Enclosure 2 is closed by a base 9 comprising a central opening 13, formed at the geometric centre of the base of the hemispheric dome, in which a piece to be tested can be placed by means of a transport mechanism 11. It should be noted that base 9 is not essential.

As the invention is practised today, the light sources 3 are white LED's arranged in nine rings, each of twelve light sources. In each ring, the light sources 3 are separated by 30° along the azimuth, and neighbouring rings are rotated by an azimuth angle difference of 15°. The rings are located at elevation angles of 2.5°, 7.5°, 12.5°, 30°, 45°, 60°, 70°, 75° and 80°. Naturally, other configurations are possible, according to requirements.

Furthermore, a transport mechanism 11 extends underneath base 9 and is adapted so as to receive a part to be tested at an external opening 15 and transport the part to be tested so as to position it in central opening 13. Any convenient type of transport mechanism can be used for this purpose. As illustrated here, transport mechanism 11 is linear and reciprocating, returning the piece to be tested to the same external opening 15, however it could be rotary, linear and acting in a single direction, or so on, with the part exiting the apparatus at a different opening. In any case, transport mechanism 11 comprises a support surface adapted to hold the part in question. Advantageously, the surface is scratch resistant to prevent scratches and marks caused on the surface from affecting the inspection. A reasonable anti-reflective surface with good scratch resistance is better than an antireflective coating damaged by scratches in avoiding interfering with the accuracy of the apparatus. In the figures, transport mechanism 11 is illustrated in an intermediate position.

A camera 7 is provided at the top of the enclosure 2 facing central opening 13, arranged so as to be able to image a part to be tested placed therein. In figure 1, the camera is situated on the axis of the enclosure 2, however it may alternatively be situated off-axis. Camera 7 may be situated outside the enclosure 2, partially inside the enclosure 2, or completely inside the enclosure 2. It is also possible to mount a plurality of cameras in different locations on the enclosure 3. It should be furthermore noted that light sources 3 likewise face central opening 13, and may be provided with lenses or other collimation means so as to ensure the light beams which illuminate the part to be tested are as quasi-parallel as possible. Furthermore, it should be noted that camera 7 may be mounted off-axis, e.g. by 10-20°. The camera may be monochrome or colour, a conventional camera, a light field camera, a polarisation camera, or any other convenient type.

Light sources 3 are operatively connected to controller 5 (only a few of such connections are illustrated in figure 1), such that controller 5 can activate each light source, or groups of light sources, individually with variable intensity. Note that controller 5 and camera 7 are not illustrated in figure 2 to avoid cluttering this figure. The intensity of light sources 3 can be varied either by e.g. varying the current to the light sources to change their brightness, and/or by changing the length of time for which they are illuminated. The intensity may be variable continuously or on discrete values. Controller 5 is furthermore operatively connected to camera 7 so as to actuate it to take an image, and also to receive the images taken. Such images may be output by the controller at 5a for further processing, if the apparatus is not entirely standalone. Controller 5 comprises, or is operatively connected to, a computer program product comprising at least one computer-readable storage medium having executable computer-readable program code portions stored therein, the computer-readable program code portions comprising a sequence of commands for causing said controller to cause the apparatus 1 to carry out the method below.

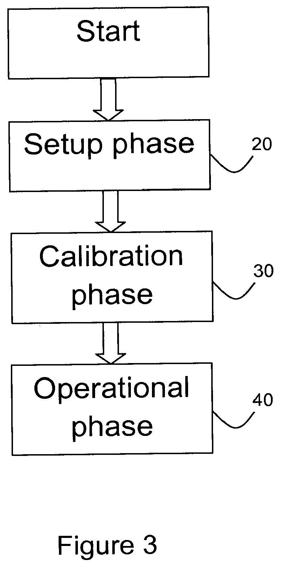

Figure 3 illustrates a flow diagram of an overview of a method for detecting visible defects in parts, according to the invention. In its broadest form, the method comprises a setup phase 20, in which the controller is set up to determine the number of images and corresponding lighting conditions to detect visible defects on a specific type of part, a calibration phase 30, in which the system is trained so as to be able to detect the visible defects using the settings determined in the setup phase 20, and an operational phase 40, in which visible defects are detected on parts to be tested, i.e. parts for which it is not known whether visible defects are present or not.

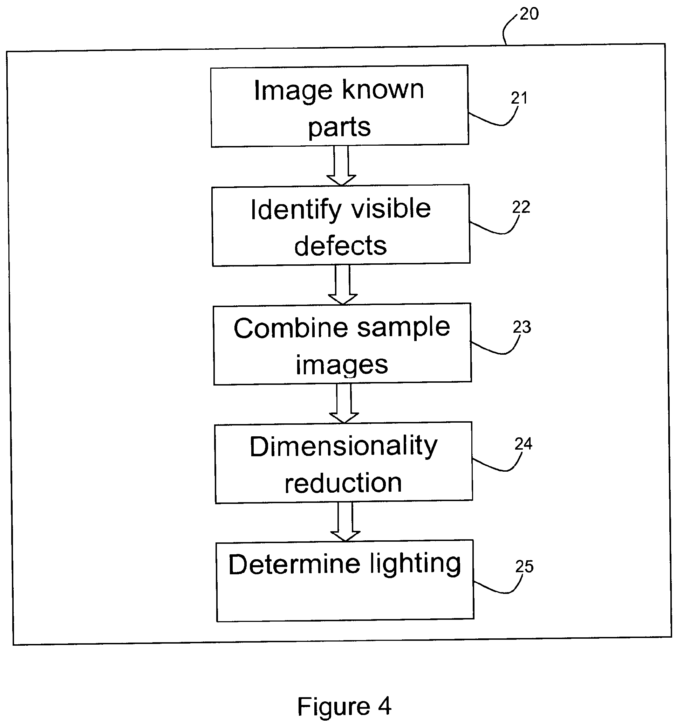

Figure 4 illustrates schematically an embodiment of the setup phase 20 in its most generic form.

The goal of the setup phase is to determine how to "drive" apparatus 1, depending on the type of pieces to be analysed. By "driving" we mean the number of images required per part to be tested, and, for each image, the amount of light that must be generated by each light source, and the camera settings. In other words, the exposure time, gain and aperture of the camera, as well as the power and duration of every light source. However, the camera settings may simply be predetermined in advance.

Although it is entirely possible to drive the apparatus 1 by simply illuminating each light source 3 individually, or in predetermined arbitrary groups, such an approach is extremely time consuming and inefficient, and is thus unacceptable in a high-speed production line scenario. With the apparatus 1 as practised today, this would require taking and processing 108 images. However, it is possible by the method of the invention to obtain substantially the same result with a much reduced number of images, resulting in substantially the same accuracy in detecting visible defects, and a significantly higher speed.

In step 21 of the setup phase, a number of parts which do not have visible defects, and a number of parts which do have visible defects are positioned in the apparatus and are imaged and sampled extensively, for example by taking one image per light source 3. As an alternative, the light sources 3 may be grouped, and one image per light source group may be taken. For instance, each group could be located in a similar azimuth/elevation zone.

The principle of using several light sources, instead of moving the sample, has the advantage of high speed. It is fairly easy to record 30 images per second using such a setup by properly synchronizing the acquisition of the image with the actuation of the light sources, whereas on the other hand moving a piece and immobilizing it 30 times per second would be a difficult task that could result in some damage to the part and/or to the apparatus. Nevertheless, there may be situations where moving the physical piece and repeating the acquisition with the appropriate lighting combination could be advantageous for revealing every possible defect. Most of these particular situations can be resolved using only two different positions of the part.

It should be noted that a proper exposure of every image is advantageous. On surfaces with horizontal orientation/inclination, the light illumination intensity is be proportional to the sine of the elevation angle of the illuminating light sources - the elevation angle at 90 degrees represents the point at the top of the hemisphere, vertically over a centered piece. This can give a gross approximation of the light intensity needed for imaging these surfaces in the setup phase but the surface composition, texture and roughness may as well impact the amount of light scattered to the camera. For more complex pieces, the light intensity may be set manually for every elevation, and even for every location, by trying several values and making sure that the resulting image is well exposed. Note that it is possible to equivalently change the camera settings such as the aperture, the exposure time, and the gain of the sensor instead of the light power, but these changes have to be converted back to an equivalent light intensity for the optimization of the setup phase.

In step 22, the visible defects are identified in the images, either manually or automatically, so as to determine which coordinates in the image are covered by the defect for every defective piece.

Once the experimental acquisition of the images in the setup phase is finished, in step 23 the images are combined into a database of N images per piece. As the invention is practised today, N = 108 since there are 108 light sources 3. The N images of a given sample are considered as being one image with N dimensions per pixel. Thus, the pixels are N-dimensional, provided that the camera is monochrome. If the camera is a colour camera, then each pixel become 3N-dimensional. More generally, if the camera delivers m components per pixel, the image is m*N dimensional. For the sake of simplicity, we will consider that the image is N dimensional, since the rest of the explanation will be the same for N dimension or for m*N dimensions.

For practical reasons, it is desirable to reduce the number of images taken per sample, because every image acquisition takes time, and time is precious in a production line. This means, in mathematical words, the dimension of our pixels should be reduced from large N to small n, where n < N. For example, we might want to reduce the number of image acquisitions from N=108 to n=16, or from N=108 to n=10. Another aspect that makes dimensionality reduction crucial is that it increases the chances of convergence of a neural network (see below). This dimensionality reduction is performed in step 24.

A Principal Component Analysis (PCA) is a simple method that can perform this dimensionality reduction. The PCA outputs a series of eigenvectors associated to an eigenvalue, the eigenvectors being normalised if required. The most important eigenvector is the one with the largest eigenvalue, and the least important vector is the one associated to the smallest eigenvector. Thus, to reduce the dimensionality, only the n most important eigenvectors need be kept. Here, the eigenvectors are vectors with N components. These N components can be translated into instructions for the light source. For example, if the eigenvector is [1 0.5 0.2 0.3 ...], it means that the light intensity of light source 1 is 1, of light source 2 is 0.5, of light source 3 is 0.2, of light source 4 is 0.3, etc. To be more generic, the eigenvector specifies the relative strengths of each light source. Thus, by applying these intensity strength coefficients to the light sources, an image can be obtained which is equivalent to the image that would have been obtained by taking the whole (multimodal) image (i.e. N individual images) and computing a linear combination of these images according to said eigenvector. It should be noted that the relative illumination between light sources 3 is important. Thus, if a constant value is added to the eigenvectors, or if the eigenvector is multiplied by a constant, the result will be qualitatively equivalent, since the image related to this eigenvector can be regenerated by dividing or subtracting said constants from the recorded image. Thus, to avoid having to use negative illumination power - which is impossible in practice, and to constrain the light power to values compatible with the apparatus hardware, it may furthermore be necessary to add a constant to the eigenvector and to multiply it by another constant to make sure that no negative values are present, nor illumination values that are brighter that what the light sources 3 can produce.

Alternatively, the dimensionality reduction can be attained by for instance a non-linear optimization procedure. In such an optimization, a performance criterion perf() is defined. Alternatively, an error criterion err() could be defined; the performance criterion being the negative of the error criterion (perf() = -err()). The idea is to perform the dimensionality reduction, from N images to n (I_N to I_n), and then reconstruct the N images from the n (I_n to I'_N) and compare the result to the original ones using this criterion (i.e. compute perf(I_N,I'_N)). The non-linear optimization tries to maximize the performance criterion, or minimise the error criterion. Any known non-linear optimization algorithm can be used here. The performance criterion could be the negative of the L1 norm (err() = L1 norm()), the L1 norm being the sum of absolute pixel differences, taken over the whole dataset, and computed dimension-wise. Alternatively, the mutual information between I'_N and I_N could be used as performance criterion. The goal of this optimization, like for the above mentioned one, is to find the number of images n to keep, and the intensity strength coefficients to apply to each light source for each image.

Such a non-linear optimization allows to conveniently add some constraints on the intensity strength coefficients. For example, the intensity strength coefficient can be limited between 0 and a maximum value, or can only allow some values (i.e. impose a quantization) that correspond to the intensity strength that can be produced in practice by the light. Indeed, if the current value of a light source is controlled using a 5-bit controller, only 32 possible intensity strength can be generated by the light for a given exposure time.

Another useful constraint may be the azimuth invariance: if it is known a priori that the piece under observation has a central symmetry, like for example a gearwheel for a timepiece, this can be imposed in the lighting configuration, for instance by specifying that no particular azimuth may be more represented than any other.

In this setup phase 20, it is important to consider the defective parts. Several actions can be taken: first, the weight, or importance, of the defective parts should ideally be of the same order of magnitude as the defect-free parts. However, when considering parts as produced in a production line, there are normally many more defect-free parts. Hence, for the setup phase 20, the defective pieces must be weighted more heavily, or simply duplicated in the database prior to dimensionality reduction. Then, to compute the number of dimensions n to be kept, and the corresponding light source 3 intensities, the most straightforward way is to start by ordering the eigenvectors generated above in descending order of eigenvalue. This is performed in steps 24 and 25. Starting with n=1, i.e., in the case of the PCA approach, taking the image corresponding to that generated by the linear combination of images defined by the eigenvector corresponding to the largest eigenvalue alone, and visually observe the defective pieces, and some defect-free pieces.

Then, n is increased gradually, adding image combinations defined by subsequent eigenvectors corresponding to successively lower eigenvalues, until the defects are clearly visible on the images of the defective pieces. Hence, the value of n attained indicates the number of images required, the values of the corresponding eigenvectors indicating the relative intensity of illumination of the light sources 3 for each image. An equivalent approach is performed for the non-linear optimization variant.

Another alternative is to increase n until the reconstruction of the defective parts, which have been manually identified in the images, and according to a predefined performance criterion, reach a similar performance than the reconstruction of the rest of the image. A third alternative, using the non-linear optimization criterion is to compute separately the performance on the defect-free images, and defect-free image parts of defective images, take the average, and consider this average as the performance criterion in the optimization.

To modulate the intensity of the light, the exposure time of the light, that is, the amount of time the light is on, can be changed. The intensity recorded by the camera is proportional to said time, provided that the exposure time of the camera is larger than said time. Another possibility is to modulate the current used in the light source, the intensity of the light being approximately proportional to the current. To be yet more precise, the relationship between the current and the recorded light intensity can be determined with a calibration procedure, to ensure that the right illumination relationship between light sources is achieved.

It is understood that every light source can be lit at the same time as any other light source, and that the intensity and duration can be set individually for every light source. Thus, by taking any two light sources in the set, the emitted light intensity ratio between the two light sources may be different for each of the n images that constitute the multimodal image of the sample. It is not necessary to modulate the intensity and duration of the light simultaneously, because any of the two parameters can be used to modify the value that will be recorded by the camera as long as the camera exposure time is longer or equal to the light exposure time.

At the termination of the setup phase 20, the operational parameters for detecting visible defects on a particular type of part, i.e. the number n of exposures and the relative intensities of the individual light sources 3 and the camera settings (if required) have been determined.

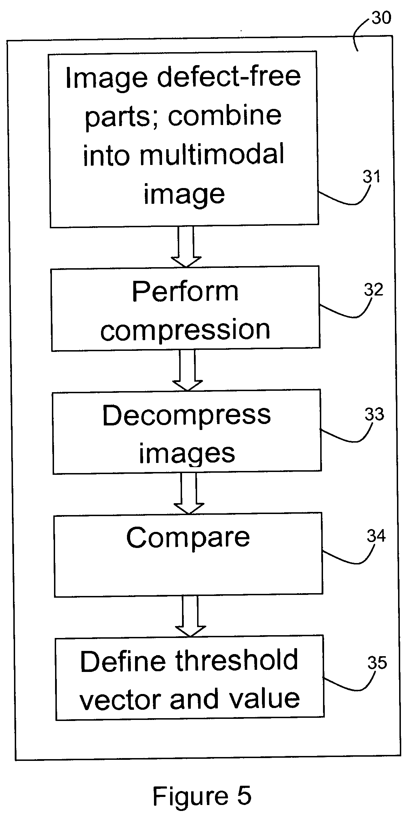

Figure 5 illustrates schematically an embodiment of the calibration phase 30 in its most generic form.

In the calibration phase, compression, such as but not limited to a dimensionality reduction, is also performed, however solely based on the defect-free samples. The goal is that the system is only able to represent defect-free samples. Thus, when a defective sample is presented, it is represented as a non-defective one, or "projected" on the nearest non-defective sample. Thus, when reconstructing the original image from the one in compression and/or in reduced dimension, the defect disappears. Finally, by comparing the reconstructed image with the original one, the defect can be isolated by comparing the original and reconstructed images.

Hence, in step 31 a number of defect-free parts are imaged using the settings obtained in the setup phase, generating original calibration images, these original calibration images being combined into an original multimodal calibration image for each part, i.e. an N- (or m*N)-dimensional calibration image.

These multimodal images are then compressed in step 31, so as to generate compressed multimodal calibration images. This compression may be carried out e.g. by dimensionality reduction, that is, from a vector R that contains every pixel of every image, by computing a transform f(), a vector R1, corresponding to the compressed calibration images, is computed that will keep most of the information about the good samples. In other words, after having reduced the information from R to R1, it is possible to reconstruct R from R1 for each multimodal image in step 33 by decompressing the compressed multimodal calibration images to generate respective decompressed multimodal calibration images for each part, represented by vector R1a, despite the fact that R1 contains much less data, in terms of bits, but should contain the same information from an information theoretic point of view. The compression can for instance be iteratively adapted to achieve this condition. It should be noted that, as is commonly understood e.g. for gif and jpeg compression that the compressed multimodal image is not an "image" as such, rather it is a collection of data, or simply a vector, representing a compressed version of the image, that requires decompression to be represented and viewed as a real image.

Subsequently, in step 33, the original multimodal calibration images are compared with the corresponding decompressed multimodal calibration images, and in step 34 a threshold vector R2 for each part is computed based upon this comparison of R and R1a. In a perfect world, threshold vector R2 would be 0 for any physical part comprised in the database of defect free samples. In practice, the components of R2 are small but not 0, below an ad-hoc threshold value. If R is well constructed, any sample that is presented to the system that deviated too much from the samples comprised in the database of good samples will exhibit some larger-than-usual values in vector R2 when R2 is a test vector, thus the defect can be detected by analysing vector R2 (see below).

One method to implement such a compression utilising a dimensionality reduction is exposed by G. E. Hinton and R. R. Salakhutdinov, "Reducing the Dimensionality of Data with Neural Networks", SCIENCE 28 JULY 2006 VOL 313. Here vector R1 is computed from R with a deep neural network, and R2 is computed by reconstructing an estimate eR of R from R1 and subtracting it from R: R2 = abs(eR-R). Simpler approaches can use principal component analysis (PCA) or independent component analysis (ICA) for computing R1 and R2. R1 being the components that hold most of the information about the original non-defective sample R.

In addition to dimensionality reduction, some compression techniques use also quantization. For example, the above mentioned example by G. E. Hinton binarises the values of each neuron activation in every intermediate layers. The quantization provides additional non linearity to the compression system.

As an example, the settings of the dimensionality reduction can be arranged so as to ensure one or more of the following conditions:
- For any physical piece without any defects, the sum SR1 a of the absolute values of vector R1a, representing the compressed then decompressed multimodal image, is greater than the sum SR2 of the absolute values of vector R2 by a factor of at least 10, preferably at least 20, further preferably at least 50, further preferably at least 100, i.e. (sR1>sR2*100),
- For any physical piece without any defects, most of the information contained in said multimodal image is also contained in vector R1, such that the dimensions dR1 of vector R1 added to the dimension dR2 of vector R2 is greater or equal to the dimension dR of vector R, and such that 10 * dR1 < dR,

As an alternative, instead of considering the images as input to the system, we can consider a transformed version of the images, and start the process of computing R1 and R2 from there:
- For example, if we know a priori that any defect will be in the spatial high frequency range, there is no point in trying to setup a whole system that tries to encode the low spatial frequency components of the good samples; thus, in this case, every input image can be high-passed prior to compression.
- In another example, the representation of the input image can be changed by being projected into sub-bands using a wavelet decomposition. Even if the representation in subbands carries the same information as the image, the neural network used to model the data tends to converge better using data, which is projected into orthogonal subbands, or close to orthogonal subbands. It can be chosen, as in the example above, to prune some subbands if it is known a priori that the defects will not be present in those subbands.
- Another alternative is to tile the image into small squares, for example squares of 16x16 pixels or 32x32 pixels, and perform a whitening operation. Whitening is a linear transformation that, in the case of the 16x16 pixels tiles, treats each tile as a 256 dimension vector, and by applying a 256x256 matrix transforms the tile such that statistically, each dimension has zero mean and unit variance. In practice, a dimensionality reduction can be performed by the whitening, by applying an mx256 matrix, keeping the m dimensions (out of 256) that are associated to the largest eigenvalues of the transformation. Here, since there are n images taken, we could even consider perform a whitening on the nx16x16 pixel cube, transforming it into a vector or m components per location.
- A lossy representation of the image can be used by transforming the image into features, for example, tiling the images into image tiles, by sweeping the tiling window over the image, compute some textures parameter for every window location, and keep theses parameters instead of the image. For example, the well-known Haralick texture features could be used for this purpose.

In all the above examples, the principle is to replace the input images with a function of these images prior to performing the defect detection, on the condition that said function does not destroy the visibility of the defects. If it is already known by experience which type of defects need to be detected, the type of functions that can be used can be predetermined by experience, and the compression can be adapted appropriately in consequence.

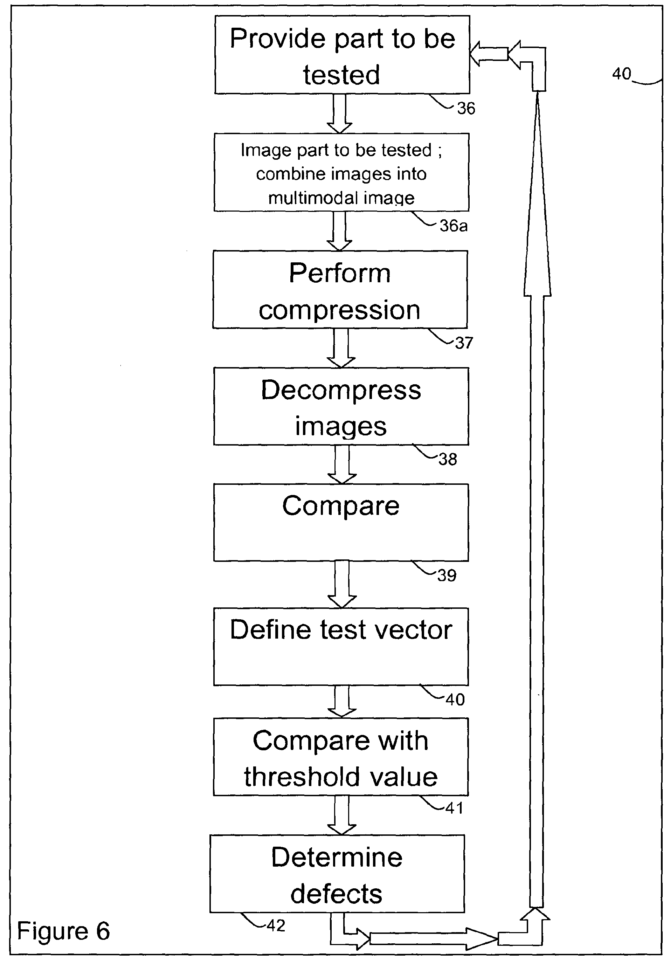

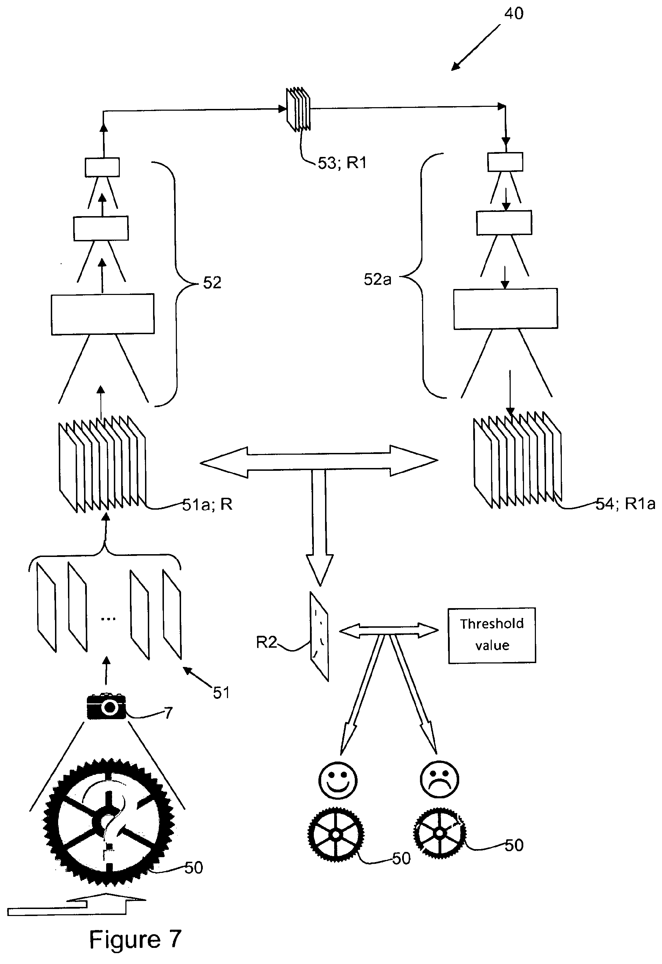

Irrespective of the manner of compression used, in the operational phase 40, detection of visible defects on parts to be tested is carried out, i.e. parts for which it is not known a priori whether a visible defect is present or not. Operational phase 40 is illustrated in figure 6 as a flow diagram, and in figure 7 schematically. In step 36, a part to be tested 50, is introduced into enclosure 2 of the apparatus 1, is imaged by camera 7 in step 36a using the same lighting conditions and number of images as determined in the setup phase 20, thereby generating original test images 51, which are combined into an original multimodal test image 51a (i.e. an N- or m*N-dimensional original test image) with a corresponding vector R. Original multimodal test image 51a is then compressed in step 37, e.g. by a neural network 52, to generate a compressed multimodal test image 53 with a corresponding vector R1, in the same manner as in step 32 for the calibration images, but with the parameterisation as determined in the calibration phase. In step 38, the original test images are subsequently decompressed, e.g. by a corresponding neural network 52a, which could be the same or different to neural network 52, thereby generating a decompressed multimodal test image 54, with corresponding vector R1a. The decompressed multimodal test image 54 should be devoid of any detail of any defect present, since the compression does not capture it. Subsequently, in steps 39 and 40, analogous to steps 34 and 35, the original test images 51 are compared with the corresponding decompressed test images 54, and a corresponding test vector R2 is defined in the same manner as vector R2 is defined in the calibration phase. It should be noted that corresponding vectors are given the same names in both the calibration and operational phases.

Test vector R2 is compared in step 41 with the threshold value as defined above. If values in the test vector R2 exceed the threshold value defined above, then there is a visible defect present. Advantageously, the threshold value should be exceeded over a predetermined contiguous area, e.g. over a certain number of adjacent pixels or groups of pixels to reduce the possibility of false positives, using simple thresholding and filtering, for example morphological filtering.

Although the present invention has been described with reference to specific embodiments, variations thereto are possible while remaining within the scope of the appended claims. It should be further noted that the method and apparatus proposed herein are particularly suited to use in the horological and jewelry industries, but are also suitable for use in (micro)-electronics, toolmaking, and many other industries.

## Claims

1. Method of detection of visible defects in physical parts comprising:
- providing an apparatus (1) comprising a hollow structure (2) adapted to receive a part (50), a plurality of light sources (3) distributed on the inside of the hollow structure (2), a camera (7) for imaging the part (50), and a controller (5) for selectively illuminating at least a portion of said light sources (3) in predetermined combinations at predetermined intensities and for actuating said camera (7);
said method comprising an operational phase comprising the steps of:
- providing a part (50) to be tested in the interior of said hollow structure;
- illuminating the part (50) to be tested with the light sources (3) in said predetermined combinations at said predetermined intensities;
- imaging the part (50) to be tested synchronously with illuminating said part (50) to be tested, thereby obtaining a number n of original test images (51);
- processing said original test images (51) to detect visible defects in said part to be tested (50),
**characterised in that** said predetermined combinations of light sources and said predetermined intensities are determined in a setup phase by:
- imaging a number of parts (50) without visible defects and a number of parts (50) with known visible defects while illuminating each part (50) with individual light sources (3) or groups of light sources (3) at known intensity, thereby obtaining a number N of sample images corresponding to a given part;
- identifying visible defects in said sample images;
- combining said sample images for each part into an N-dimensional image for each part having N dimensions per pixel;
- performing a dimensionality reduction of said N-dimensional images to reduce the dimensionality of said images while still permitting identification of said visible defects, thereby generating corresponding n-dimensional images;
- determining said predetermined combinations of light sources and said predetermined intensities based on a result of said dimensionality reduction.

2. Method according to the preceding claim, wherein said dimensionality reduction is performed by carrying out a Principal Component Analysis, thereby generating a plurality of eigenvectors representing the relative intensity of each light source (3), each eigenvector being associated with a corresponding eigenvalue, ordering the eigenvectors according to magnitude of the respective eigenvalue, discarding eigenvectors with lower eigenvalues so as to determine the minimum number n of eigenvectors to permit identification of visible defects, said number n corresponding to the minimum number of images required to permit identification of visible defects, the corresponding eigenvectors representing the relative illumination of each light source for a given image.

3. Method according to the preceding claim, wherein said eigenvectors are normalised such that no component of an eigenvector has a value below zero and such that no component of an eigenvector has a value higher than a value corresponding to the maximum possible intensity of light.

4. Method according to claim 1, wherein said dimensionality reduction is performed by a nonlinear optimisation procedure, said nonlinear optimisation procedure comprising maximising a performance criterion so as to compute the minimum number n of images required to permit identification of visible defects.

5. Method according to any preceding claim, further comprising a calibration phase, comprising:
- taking a number n of images of each of a plurality of parts (50) without visible defects, said images being obtained while illuminating each of said parts (50) with the light sources (3) in said predetermined combinations at said predetermined intensities, thereby generating a plurality of original calibration images;
- combining said original calibration images into an original multimodal calibration image for each part;
- performing compression on said original multimodal calibration images, thereby generating a compressed multimodal calibration image corresponding to a respective original multimodal calibration image of a respective part;
- performing decompression on said compressed multimodal calibration images, thereby generating a plurality of decompressed multimodal calibration images each corresponding to a respective compressed multimodal calibration image and to a corresponding original multimodal calibration image for each part;
- defining a threshold vector representing the difference between each original multimodal calibration image and the corresponding decompressed multimodal calibration image, said compression being adapted such that said values contained within said threshold vector are lower than a threshold value.

6. Method according to the preceding claim, wherein said adaptation of said compression comprises minimising said threshold vector and/or said threshold value by means of at least one of: training a neural network; performing Principal Component Analysis; performing Independent Component Analysis.

7. Method according to one of claims 5 or 6, wherein, in said operational phase, said processing of said original test images comprises:
- combining said original test images (51) into an original multimodal test image (51 a);
- performing said compression on said original multimodal test image (51 a), thereby generating a compressed multimodal test image (53)
- performing decompression on said compressed multimodal test image (53), thereby generating a decompressed multimodal test image (54);
- defining a test vector (R2) representing a difference between the original multimodal test image (51a) and corresponding decompressed multimodal test image (54);
- if said test vector (R2) comprises values greater than said predetermined threshold value, or greater than said predetermined threshold value plus a tolerance value, determining the part (50) to be tested as comprising a visible defect;
- if said test vector (R2) does not comprise values greater than said predetermined threshold value, or greater than said predetermined threshold value plus a tolerance value, determining the part (50) to be tested as not comprising a visible defect.

8. Method according to one of claims 5-7, wherein said compression is performed by a dimensionality reduction.

9. Method according to the preceding claim, further comprising defining a vector R1a representing said decompressed multimodal calibration image, wherein said dimensionality reduction comprises ensuring that, for a part (50) without a visible defect, the sum SR1a of the absolute values of vector R1a is at least ten times greater than the sum of the absolute values of the corresponding test threshold.

10. Method according to any preceding claim, wherein said predetermined intensities are determined by the brightnesses of the light sources (3) and/or the length of time of illumination of the light sources (3).

11. Apparatus (1) for detection of visible defects in parts (50), comprising:
- a hollow structure (2) adapted to receive a part (50);
- a plurality of light sources (3) distributed on the inside of the hollow structure (2);
- a camera (7) for imaging the part (50), said camera (7) being preferably at least one of: a colour camera; a light field camera; a polarisation camera.;
- a controller (5) for selectively illuminating at least a portion of said light sources (3) in predetermined combinations at predetermined intensities and for actuating said camera (7);
**characterised in that** said controller (5) is adapted to carry out the method of one of claims 1-9.

12. Apparatus (1) according to the preceding claim, wherein the hollow structure (2) is a hemispherical enclosure closed by a base (9), said base (9) comprising a substantially central opening (13) for receiving a part (50), the apparatus further comprising a part holder (11) adapted to support said part (50) and adapted to travel underneath the enclosure (2) so as to position the part (50) in a test position in said substantially central opening (13), said part holder (11) being arranged to close said substantially central opening (13) when said part holder (11) is in said test position.

13. Apparatus (1) according to the preceding claim, wherein at least a part of said part holder (11) is substantially scratch-resistant, in particular a part thereof destined to close said substantially central opening (13), and wherein the inside of said enclosure (2) is coated with an anti-reflective black coating.

14. Apparatus (1) according to one of claims 12-13, wherein said light sources (3) are LEDs disposed at a plurality of different azimuths and/or elevations on the inside of said hemispherical enclosure (2) at sufficient distance from the substantially central opening (13) that light rays emanating from said light sources (3) are quasi-parallel.

15. Computer program product comprising at least one computer-readable storage medium having executable computer-readable program code portions stored therein, the computer-readable program code portions comprising a sequence of commands for causing said controller (5) comprised in an apparatus (1) according to one of claims 9-14 to carry out the method of one of claims 1-8.

## Patentansprüche

1. Verfahren zum Erkennen von sichtbaren Defekten in physischen Teilen, umfassend:
- Bereitstellen einer Vorrichtung (1), die eine hohle Struktur (2) umfasst, die ausgelegt ist, um einen Teil (50) aufzunehmen, eine Vielzahl von Lichtquellen (3), die auf der Innenseite der hohlen Struktur (2) verteilt sind, eine Kamera (7), um den Teil (50) abzubilden, und eine Steuervorrichtung (5), um selektiv mindestens einen Abschnitt der Lichtquellen (3) in vorbestimmten Kombinationen und mit vorbestimmten Intensitäten zu beleuchten und um die Kamera (7) zu betätigen; wobei das Verfahren eine Betriebsphase umfasst, die die folgenden Schritte umfasst:
- Bereitstellen eines Teils (50), der getestet werden soll, im Inneren der hohlen Struktur;
- Beleuchten des Teils (50), der getestet werden soll, mit den Lichtquellen (3) in den vorbestimmten Kombinationen mit den vorbestimmten Intensitäten;
- Abbilden des Teils (50), der getestet werden soll, synchron mit dem Beleuchten des Teils (50), der getestet werden soll, wodurch eine Anzahl n von ursprünglichen Testbildern (51) erhalten wird (51);
- Verarbeiten der ursprünglichen Testbilder (51), um sichtbare Defekte in dem Teil, der getestet werden soll (50), zu erkennen,
**dadurch gekennzeichnet, dass** die vorbestimmten Kombinationen von Lichtquellen und die vorbestimmten Intensitäten in einer Einstellphase wie folgt bestimmt werden:
- Abbilden einer Anzahl von Teilen (50) ohne sichtbare Defekte und einer Anzahl von Teilen (50) mit bekannten sichtbaren Defekten, während jeder Teil (50) mit individuellen Lichtquellen (3) oder Gruppen von Lichtquellen (3) mit bekannter Intensität beleuchtet wird, wodurch eine Anzahl N von Probebildern erhalten wird, die einem bestimmten Teil entsprechen;
- Identifizieren der sichtbaren Defekte in den Probebildern;
- Kombinieren der Probebilder für jeden Teil zu einem N-dimensionalem Bild für jeden Teil mit N Dimensionen pro Pixel;
- Durchführen einer Dimensionalitätsreduzierung der N-dimensionalen Bilder, um die Dimensionalität der Bilder zu reduzieren, während immer noch die Identifizierung der sichtbaren Defekte ermöglicht wird, wodurch die passenden n-dimensionalen Bilder erzeugt werden;
- Bestimmen der vorbestimmte Kombinationen von Lichtquellen und der vorbestimmten Intensitäten auf der Grundlage eines Ergebnisses der Dimensionalitätsreduzierung.

2. Verfahren nach dem vorhergehenden Anspruch, wobei die Dimensionalitätsreduzierung durch die Durchführung einer Hauptkomponentenanalyse erfolgt, wodurch eine Vielzahl von Eigenvektoren erzeugt wird, die die relative Intensität jeder Lichtquelle (3) darstellen, wobei jeder Eigenvektor mit einem passenden Eigenwert assoziiert ist, der die Eigenvektoren je nach der Größe des passenden Eigenwerts ordnet, wobei Eigenvektoren mit niedrigeren Eigenwerten verworfen werden, um die minimale Anzahl n von Eigenvektoren zu bestimmen, um die Identifizierung von sichtbaren Defekten zu ermöglichen wobei die Anzahl n der minimalen Anzahl von Bildern entspricht, die erforderlich sind, um sichtbare Defekte zu identifizieren, wobei die passenden Eigenvektoren die relative Beleuchtung jeder Lichtquelle für ein bestimmtes Bild darstellen.

3. Verfahren nach dem vorhergehenden Anspruch, wobei die Eigenvektoren normiert sind, so dass keine Komponente eines Eigenvektors einen Wert unter Null aufweist, und so dass keine Komponente eines Eigenvektors ein Wert aufweist, der höher als ein Wert ist, der der maximal möglichen Intensität von Licht entspricht.

4. Verfahren nach Anspruch 1, wobei die Dimensionalitätsreduzierung durch ein nichtlineares Optimierungsverfahren erfolgt, wobei das nichtlineare Optimierungsverfahren die Maximierung eines Leistungskriteriums umfasst, um die minimale Anzahl n von Bildern zu berechnen, die erforderlich ist, um die Identifizierung von sichtbaren Defekte zu ermöglichen.

5. Verfahren nach einem der vorhergehenden Ansprüche, weiter umfassend eine Kalibrierungsphase, umfassend:
- Verwenden einer Anzahl n von Bildern von jeder einer Vielzahl von Teilen (50) ohne sichtbare Defekte, wobei die Bilder erhalten werden, während jeder der Teile (50) mit den Lichtquellen (3) in den vorbestimmten Kombinationen mit den vorbestimmten Intensitäten beleuchtet wird, wodurch eine Vielzahl von Bildern originalen Kalibrierungsbildern erzeugt wird;
- Kombinieren der originalen Kalibrierungsbilder zu einem originalen multimodalen Kalibrierungsbild für jeden Teil;
- Ausführen einer Kompression auf den originalen multimodalen Kalibrierungsbildern, wodurch eine komprimiertes multimodales Kalibrierungsbild erzeugt wird, das einem passenden originalen multimodalen Kalibrierungsbild eines passenden Teils entsprechen
- Ausführen einer Dekompression auf den komprimierten multimodalen Kalibrierungsbildern, wodurch eine Vielzahl von dekomprimierten multimodalen Kalibrierungsbildern erzeugt wird, die jeweils einem passenden komprimierten multimodalen Kalibrierungsbild und einem passenden originalen multimodalen Kalibrierungsbild für jeden Teil entsprechen;
- Definieren eines Schwellenvektors, der die Differenz zwischen jedem originalen multimodalen Kalibrierungsbild und dem passenden dekomprimierten multimodalen Kalibrierungsbild darstellt, wobei die Kompression so ausgelegt ist, dass die Werte, die in dem Schwellenvektor enthalten sind, niedriger ist als ein Schwellenwert sind.

6. Verfahren nach dem vorhergehenden Anspruch, wobei die Anpassung der Kompression die Minimierung des Schwellenvektors und/oder des Schwellenwerts mit Hilfe von mindestens einem der Folgenden umfasst: Trainieren eines neuronalen Netzwerks; Durchführen einer Hauptkomponentenanalyse; Durchführen einer unabhängigen Komponentenanalyse.

7. Verfahren nach einem der Ansprüche 5 oder 6, wobei in der Betriebsphase die Verarbeitung des originalen Testbilds Folgendes umfasst:
- Kombinieren der originalen Testbilder (51) zu einem originalen multimodalen Testbild (51a),
- Durchführen der Kompression auf dem originalen multimodalen Testbild (51a), dadurch Erzeugen eines komprimierten multimodalen Testbilds (53),
- Durchführen einer Dekompression auf dem komprimierten multimodalen Testbild (53), dadurch Erzeugen eines dekomprimierten multimodalen Testbilds (54),
- Definieren eines Testvektors (R2), der einen Unterschied zwischen dem originalen multimodalen Testbild (51a) und dem passenden dekomprimierten multimodalen Testbild (54) darstellt;
- wenn der Testvektor (R2) Werte umfasst, die größer als der vorbestimmte Schwellenwert sind, oder größer als der vorbestimmte Schwellenwert plus einem Toleranzwert, Bestimmen des Teils (50), der getestet werden soll, als mit einem sichtbaren Defekt;
- wenn der Testvektor (R2) keine Werte umfasst, die größer als der vorbestimmte Schwellenwert sind, oder größer als der vorbestimmte Schwellenwert plus einem Toleranzwert, Bestimmen des Teils (50), der getestet werden soll, als ohne einen sichtbaren Defekt.

8. Verfahren nach einem der Ansprüche 5 - 7, wobei die Kompression durch eine Dimensionalitätsreduktion durchgeführt wird.

9. Verfahren nach dem vorhergehenden Anspruch, weiter umfassend Definieren eines Vektors R1a, der das dekomprimierte multimodales Kalibrierungsbild darstellt, wobei die Dimensionalitätsreduzierung das Sicherstellen umfasst, das, für einen Teil (50) ohne einen sichtbaren Defekt, die Summe SR1a der absoluten Werte von Vektor R1a mindestens zehnmal größer als die Summe der absoluten Werte der passenden Testschwelle ist.

10. Verfahren nach einem der vorhergehenden Ansprüche, wobei die vorbestimmten Intensitäten durch die Helligkeiten der Lichtquellen (3) und/oder die Zeitdauer der Beleuchtung der Lichtquellen (3) bestimmt werden.

11. Vorrichtung (1) zum Erkennen von sichtbaren Defekten in Teilen (50), umfassend:
- eine hohle Struktur (2), die ausgelegt ist, um einen Teil (50) aufzunehmen,
- eine Vielzahl von Lichtquellen (3), die auf der Innenseite der hohlen Struktur (2) verteilt sind;
- eine Kamera (7), um den Teil (50) abzubilden, wobei die Kamera (7) vorzugsweise mindestens eines der Folgenden ist: eine Farbkamera; eine Lichtfeld-Kamera; eine Polarisierungskamera;
- eine Steuervorrichtung (5), um selektiv mindestens einen Abschnitt der Lichtquellen (3) in vorbestimmten Kombinationen mit vorbestimmten Intensitäten zu beleuchten und um die Kamera (7) zu betätigen;
**dadurch gekennzeichnet, dass** die Steuervorrichtung (5) ausgelegt ist, um das Verfahren nach einem der Ansprüche 1 - 9 durchzuführen.

12. Vorrichtung (1) nach dem vorhergehenden Anspruch, wobei die hohle Struktur (2) ein halbkugelförmiges Gehäuse ist, das durch eine Basis (9) geschlossen ist, wobei die Basis (9) eine im Wesentlichen zentrale Öffnung (13) umfasst, um einen Teil (50) aufzunehmen, wobei die Vorrichtung weiter einen Teilhalter (11) umfasst, der ausgelegt ist, um den Teil (50) zu halten und ausgelegt ist, um unter dem Gehäuse (2) zu verlaufen, um den Teil (50) in einer Testposition in der im Wesentlichen zentralen Öffnung (13), zu positionieren, wobei der Teilehalter (11) angeordnet ist, um die im Wesentlichen zentrale Öffnung (13) zu schließen, wenn sich der Teilhalter (11) in der Testposition befindet.

13. Vorrichtung (1) nach dem vorhergehenden Anspruch, wobei mindestens ein Teil des Teilhalters (11) im Wesentlichen kratzresistent ist, insbesondere ein Teil davon ausgelegt ist, die im Wesentlichen zentrale Öffnung (13) zu schliessen, und wobei die Innenseite des Gehäuses (2) mit einer antireflektierenden schwarzen Beschichtung bedeckt ist.

14. Vorrichtung (1) nach einem der Ansprüche 12 - 13, wobei die Lichtquellen (3) LEDs sind, die an einer Vielzahl von unterschiedlichen Azimuten und/oder Erhebungen auf der Innenseite des halbkugelförmigen Gehäuses (2) in einem ausreichenden Abstand von der im Wesentlichen zentralen Öffnung (13) angeordnet sind, dass Lichtstrahlen, die von den Lichtquellen (3) ausgesendet werden, quasi-parallel sind.

15. Computerprogrammprodukt, umfassend mindestens ein computerlesbares Speichermedium mit ausführbaren computerlesbaren Programmcodeabschnitten, die darin gespeichert sind, wobei die computerlesbaren Programmcodeabschnitte eine Sequenz von Befehlen umfassen, um zu verursachen, dass die Steuervorrichtung (5), die in einer Vorrichtung (1) nach einem der Ansprüche 9 - 14 enthalten ist, das Verfahren nach einem der Ansprüche 1 - 8 durchführt.

## Revendications

1. Procédé de détection de défauts visibles dans des pièces physiques comprenant :
- la fourniture d'un appareil (1) comprenant une structure creuse (2) adaptée pour recevoir une pièce (50), une pluralité de sources de lumière (3) réparties à l'intérieur de la structure creuse (2), une caméra (7) pour imager la pièce (50), et un contrôleur (5) pour éclairer de manière sélective au moins une partie desdites sources de lumière (3) dans des combinaisons prédéterminées à des intensités prédéterminées et pour actionner ladite caméra (7) ;
ledit procédé comprenant une phase opérationnelle comprenant les étapes suivantes :
- la fourniture d'une pièce (50) devant être testée à l'intérieur de ladite structure creuse ;
- l'éclairage de la pièce (50) devant être testée avec les sources de lumière (3) dans lesdites combinaisons prédéterminées auxdites intensités prédéterminées ;
- l'imagerie de la pièce (50) devant être testée de manière synchrone avec l'éclairage de ladite pièce (50) devant être testée, obtenant ainsi un nombre n d'images de test originales (51) ;
- le traitement desdites images de test originales (51) pour détecter les défauts visibles dans ladite pièce devant être traitée (50),
**caractérisé en ce que** lesdites combinaisons prédéterminées de sources de lumière et lesdites intensités prédéterminées sont déterminées dans une phase de configuration par :
- l'imagerie d'un nombre de pièces (50) sans défauts visibles et d'un nombre de pièces (50) avec des défauts visibles connus tout en éclairant chaque pièce (50) avec des sources de lumière individuelles (3) ou des groupes de sources de lumière (3) à l'intensité connue, obtenant ainsi un nombre N d'images échantillons correspondant à une pièce donnée ;
- l'identification de défauts visibles sur lesdites images échantillons ;
- la combinaison desdites images échantillons pour chaque pièce dans une image N-dimensionnelle pour chaque pièce ayant N dimensions par pixel ;
- la réalisation d'une réduction de dimensionnalité desdits images N-dimensionnelles pour réduire la dimensionnalité desdites images tout en permettant toujours l'identification desdits défauts visibles, générant ainsi des images n-dimensionnelles correspondantes ;
- la détermination desdites combinaisons prédéterminées de sources de lumière et desdites intensités prédéterminées sur la base d'un résultat de ladite réduction de dimensionnalité.

2. Procédé selon la revendication précédente, dans lequel ladite réduction de dimensionnalité est effectuée en procédant à une analyse en composantes principales, générant ainsi une pluralité de vecteurs propres représentant l'intensité relative de chaque source de lumière (3), chaque vecteur propre étant associé à une valeur propre correspondante, la mise en ordre des vecteurs propres selon la grandeur de la valeur propre respective, la suppression des vecteurs propres ayant des valeurs propres inférieures de sorte à déterminer le nombre minimum n de vecteurs propres pour permettre l'identification de défauts visibles, ledit nombre n correspondant au nombre minimum d'images requis pour permettre l'identification de défauts visibles, les vecteurs propres correspondants représentant l'éclairage relatif de chaque source de lumière pour une image donnée.

3. Procédé selon la revendication précédente, dans lequel lesdits vecteurs propres sont normalisés de telle sorte qu'aucune composante d'un vecteur propre n'ait une valeur inférieure à zéro et de telle sorte qu'aucune composante d'un vecteur propre n'ait une valeur supérieure à une valeur correspondant à l'intensité de lumière maximale possible.

4. Procédé selon la revendication 1, dans lequel ladite réduction de dimensionnalité est effectuée par une procédure d'optimisation non linéaire, ladite procédure d'optimisation non linéaire comprenant la maximisation d'un critère de performance de sorte à calculer le nombre n d'images minimum requis pour permettre l'identification de défauts visibles.

5. Procédé selon l'une quelconque des revendications précédentes, comprenant en outre une phase d'étalonnage, comprenant :
- la prise d'un nombre n d'images de chacune d'une pluralité de pièces (50) sans défauts visibles, lesdites images étant obtenues pendant l'éclairage de chacune desdites pièces (50) avec les sources de lumière (3) dans lesdites combinaisons prédéterminées auxdites intensités prédéterminées, générant ainsi une pluralité d'images d'étalonnage originales ;
- la combinaison desdites images d'étalonnage originales en une image d'étalonnage multimodale originale pour chaque pièce ;
- la réalisation d'une compression sur lesdites images d'étalonnage multimodales originales, générant ainsi une image d'étalonnage multimodale compressée correspondant à une image d'étalonnage multimodale originale respective d'une pièce respective ;
- l'exécution de la décompression sur lesdites images multimodales compressées, générant ainsi une pluralité d'images d'étalonnage multimodales décompressées correspondant chacune à une image d'étalonnage multimodale compressée respective et à une image d'étalonnage multimodale originale correspondante pour chaque pièce ;
- la définition d'un vecteur seuil représentant la différence entre chaque image d'étalonnage multimodale originale et l'image d'étalonnage multimodale décompressée correspondante, ladite compression étant adaptée de telle sorte que lesdites valeurs contenues à l'intérieur dudit vecteur seuil sont plus faibles qu'une valeur seuil.

6. Procédé selon la revendication précédente, dans lequel ladite adaptation de ladite compression comprend la minimisation dudit vecteur seuil et/ou de ladite valeur seuil grâce à au moins l'une : d'une formation d'un réseau neuronal ; d'une réalisation d'une analyse en composantes principales ; d'une réalisation d'une analyse en composantes indépendantes.

7. Procédé selon la revendication 5 ou 6 dans lequel, dans ladite phase opérationnelle, ledit traitement desdites images de test originales comprend :
- la combinaison desdites images de test originales (51) en une image de test multimodale originale (51a) ;
- la réalisation de ladite compression sur ladite image de test multimodale originale (51a), générant ainsi une image de test multimodale compressée (53)
- la réalisation de la décompression sur ladite image de test multimodale compressée (53), générant ainsi une image de test multimodale décompressée (54) ;
- la définition d'un vecteur de test (R2) représentant une différence entre l'image de test multimodale originale (51a) et l'image de test multimodale décompressée (54) ;
- si ledit vecteur de test (R2) comprend des valeurs supérieures à ladite valeur seuil prédéterminée, ou supérieures à ladite valeur seuil prédéterminée plus une valeur de tolérance, la détermination de la pièce (50) devant être testée comme comprenant un défaut visible ;
- si ledit vecteur de test (R2) ne comprend pas des valeurs supérieures à ladite valeur seuil prédéterminée, ou supérieures à ladite valeur seuil prédéterminée plus une valeur de tolérance, la détermination de la pièce (50) devant être testée comme ne comprenant pas de défaut visible.

8. Procédé selon l'une des revendications 5 à 7, dans lequel ladite compression est effectuée par une réduction de dimensionnalité.

9. Procédé selon la revendication précédente, comprenant en outre la définition d'un vecteur R1a représentant ladite image d'étalonnage multimodale décompressée, dans lequel ladite réduction de dimensionnalité comprend le fait de s'assurer que, pour une pièce (50) sans défaut visible, la somme SR1a des valeurs absolues du vecteur R1a est au moins dix fois supérieure à la somme des valeurs absolues du seuil de test correspondant.

10. Procédé selon l'une quelconque des revendications précédentes, dans lequel lesdites intensités prédéterminées sont déterminées par les luminosités des sources de lumière (3) et/ou la longueur du temps d'éclairage des sources de lumière (3).

11. Appareil (1) pour la détection de défauts visibles dans les pièces (50), comprenant :
- une structure creuse (2) adaptée pour recevoir une pièce (50) ;
- une pluralité de sources de lumière (3) réparties à l'intérieur de la structure creuse (2) ;
- une caméra (7) pour imager la pièce (50), ladite caméra (7) étant de préférence au moins l'une : d'une caméra couleur, d'une caméra de champ lumineux ; d'une caméra de polarisation ;
- un contrôleur (5) pour éclairer de manière sélective au moins une partie desdites sources de lumière (3) dans des combinaisons prédéterminées à des intensités prédéterminées et pour actionner ladite caméra (7) ;
**caractérisé en ce que** ledit contrôleur (5) est adapté pour effectuer le procédé selon l'une quelconque des revendications 1 à 9.

12. Appareil (1) selon la revendication précédente, dans lequel la structure creuse (2) est une enceinte hémisphérique fermée par une base (9), ladite base (9) comprenant une ouverture sensiblement centrale (13) pour recevoir une pièce (50), l'appareil comprenant en outre un porte-pièce (11) adapté pour supporter ladite pièce (50) et adapté pour se déplacer en dessous de l'enceinte (2) de sorte à positionner la pièce (50) dans une position de test dans ladite ouverture sensiblement centrale (13), ledit porte-pièce (11) étant conçu pour fermer ladite ouverture sensiblement centrale (13) lorsque ledit porte-pièce (11) est dans ladite position de test.

13. Appareil (1) selon la revendication précédente, dans lequel au moins une partie dudit porte-pièce (11) est sensiblement résistante aux éraflures, en particulier une partie de celui-ci destinée à fermer ladite ouverture sensiblement centrale (13), et dans lequel l'intérieur de ladite enceinte (2) est revêtu avec un revêtement noir antireflet.

14. Appareil (1) selon l'une des revendications 12 et 13, dans lequel lesdites sources de lumière (3) sont des DEL disposées à une pluralité d'azimuts et/ou d'élévations différent(e)s à l'intérieur de ladite enceinte hémisphérique (2) à une distance suffisante de l'ouverture sensiblement centrale (13) pour que les rayons de lumière émanant desdites sources de lumière (3) soient quasi-parallèles.

15. Produit de programme informatique comprenant au moins un support de stockage lisible par ordinateur ayant des parties de code de programme lisible par ordinateur exécutables stockées à l'intérieur, les parties de code de programme lisible par ordinateur comprenant une séquence de commandes pour amener ledit contrôleur (5) compris dans un appareil (1) selon l'une des revendications 9 à 14 à effectuer le procédé de l'une des revendications 1 à 8.
